# EUROPÄISCHE PATENTSCHRIFT

(11) **EP 4 428 745 B1**
(45) Veröffentlichungstag und Bekanntmachung des Hinweises auf die Patenterteilung: **15.04.2026**
(21) Anmeldenummer: 24150362.2
(22) Anmeldetag: 04.01.2024
(51) Int. Cl.: G06K 7/10

(54) **CODELESE-GERÄT UND COMPUTER-IMPLEMENTIERTES VERFAHREN ZUM BETREIBEN DES CODELESE-GERÄTS**
CODE READING DEVICE AND COMPUTER-IMPLEMENTED METHOD FOR OPERATING THE CODE READING DEVICE
LECTEUR DE CODE ET PROCÉDÉ MIS EN OEUVRE PAR ORDINATEUR POUR FAIRE FONCTIONNER LE LECTEUR DE CODE

(30) Priorität: 07.03.2023 DE 102023105668
(43) Veröffentlichungstag der Anmeldung: 11.09.2024
(73) Patentinhaber: SICK AG, 79183 Waldkirch (DE)
(72) Erfinder: Schütz, Frank, 79365 Rheinhausen (DE); Reichelt, Daniel, 79312 Emmendingen (DE)

(56) Entgegenhaltungen:
- EP-A1- 3 836 001
- EP-A1- 4 047 499
- EP-A2- 1 430 452

## Beschreibung

Die Erfindung betrifft ein Codelese-Gerät zum Lesen eines optischen Codes gemäß dem Anspruch 1 und ein computer-implementiertes Verfahren zum Betreiben des Codelese-Geräts gemäß dem Anspruch 10.

Ein solches Codelese-Gerät wird in vielen Bereichen des Alltags eingesetzt, um Informationsdaten aus einem optischen Code auszulesen, wobei der optische Code in Form eines Strichcodes, zweidimensionalen Codes (z.B. QR-Code, Datamatrix-Code) oder sonstigen Codes (z.B. Farbcodes, Dot-Codes) ausgebildet sein kann. Hierbei weist das Codelese-Gerät eine Beleuchtungseinheit auf, um einen Lesebereich des Codelese-Geräts bzw. den optischen Code zu belichten. Ferner weist das Codelese-Gerät eine Empfangseinheit auf, die zum Empfangen von von dem optischen Code remittiertem Licht dient, so dass der optische Code beim Durchlaufen des Codes durch einen Lesebereich des Codelese-Geräts erfasst werden kann und aus dem empfangenen Licht Signale zum Ermitteln der Informationsdaten des optischen Codes erzeugt werden können.

Solch ein Codelese-Gerät wird beispielsweise im Retailbereich an Supermarktkassen oder in der Logistik zur automatischen Paketidentifikation, zur Sortierung von Postsendungen oder bei der Gepäckabfertigung in Flughäfen und in anderen Logistikanwendungen häufig eingesetzt.

Wenn ein Codelese-Gerät durch einen Nutzer in Betrieb genommen wird oder eine Anpassung an dem Codelese-Gerät vorgenommen werden muss, weil sich zum Beispiel Typen des optischen Codes ändern oder Parameter an Anlagenabläufe anzupassen sind, dann ist in der Regel ein Computer mit geeigneter Verbindung zum Codelese-Gerät notwendig, um das Codelese-Gerät entsprechend neu zu parametrieren und die Konfiguration des Codelese-Geräts zu ändern.

Aufgrund von anwendungsbedingter Montage des Codelese-Geräts, wie beispielsweise an einem Förderband oder in einem Logistik-Hochregallager, ist ein einfacher und hindernisfreier Zugang zu dem Codelese-Gerät nicht immer gewährleistet.

Ferner kann ein einwandfreier Betrieb des Codelese-Geräts durch einen Zugriff auf die Konfiguration des Codelese-Geräts durch einen nicht-autorisierten Nutzer gefährdet sein.

Es ist daher eine Aufgabe der Erfindung, ein Codelese-Gerät zum Lesen eines optischen Codes bereitzustellen, welches einen leichten aber dennoch sicheren (im Sinne von autorisierten) Zugriff auf das Codelese-Gerät erlaubt, um an diesem zulässige Änderungen vornehmen zu können.

Diese Aufgabe wird durch ein Codelese-Gerät mit den Merkmalen des Anspruchs 1 gelöst. Anspruch 1 ist gegenüber EP 3 836 001 A1 abgegrenzt.

Das erfindungsgemäße Codelese-Gerät zum Lesen eines optischen Codes umfasst eine Beleuchtungseinheit zum Beleuchten eines Lesebereichs des Codelese-Geräts, eine Empfangseinheit zum Erfassen des Codes aus dem Lesebereich, eine Auswerteeinheit zum Ermitteln von Informationen des Codes, und eine Audioeinheit zum Erfassen von akustischen Signalen einer Stimme eines Nutzers, wobei die Auswerteeinheit ausgebildet ist, einen Stimmeneinlernprozess auszuführen, um eine erfasste Stimme als eine individuelle Stimme eines autorisierten Nutzers einzulernen und abzuspeichern, so dass die Stimme als personalisierte Stimme des autorisierten Nutzers abgespeichert ist, und wobei die Auswerteeinheit weiter ausgebildet ist, einen Stimmenerkennungsprozess auszuführen, in dem die personalisierte Stimme als Stimme des autorisierten Nutzers erkannt wird, und weiter ausgebildet ist, nur dann definierte Funktionen des Codelese-Geräts auszuführen, wenn ein Aufruf der Funktion von der personalisierten Stimme des autorisierten Nutzers erkannt wurde.

Der Stimmenerkennungsprozess ermöglicht somit dem Codelese-Gerät, die personalisierte Stimme des autorisierten Nutzers der definierten Funktion eindeutig zuzuordnen, so dass nur der autorisierte Nutzer mit seiner Stimme diese definierte Funktion des Codelese-Geräts aufrufen bzw. zur Ausführung veranlassen kann.

Gemäß einem bevorzugten Ausführungsbeispiel ist der Stimmeneinlernprozess ausgebildet, eine Autorisierung des Nutzers durch eine definierte Sprachsequenz, ein Passwort oder einen Fingerabdruck einzulernen. Hierfür ist insbesondere ein Mikrofon oder ein Fingerabdrucksensor vorgesehen, um die Autorisierung zum Starten des Stimmeneinlernprozesses durchzuführen. Mit der Feststellung der richtigen Sprachsequenz, des richtigen Passwortes oder des richtigen Fingerabdrucks ist der Nutzer als autorisierter Nutzer identifiziert.

Weiterhin ist insbesondere die definierte Sprachsequenz in der Steuerung des Codelese-Geräts gespeichert und vorgesehen, zum Wiedererkennen oder zum Einlernen der Stimme des autorisierten Nutzers durch den Stimmenerkennungsprozess. Hierbei fordert der Stimmenerkennungsprozess des Codelese-Geräts den zu autorisierenden Nutzer auf, die definierte Sprachsequenz wiederzugeben.

Bei der Wiedergabe der definierten Sprachsequenz durch den Nutzer führt der Stimmenerkennungsprozess anhand der definierten Sprachsequenz das Einlernen oder die Wiedererkennung der Stimme des Nutzers durch.

Bei der Wiedererkennung wird ein Vergleich zwischen einer abgespeicherten Stimme eines autorisierten Nutzers mit der erfassten Stimme durchgeführt. Wenn eine Übereinstimmung festgestellt ist, dann ist die erfasste Stimme als personalisierte Stimme des autorisierten Nutzers erkannt und die definierte Funktion ist für die personalisierte Stimme freigegeben.

Vorteilhafterweise ist eine künstliche Intelligenz vorgesehen, die die Stimme des autorisierten Nutzers maschinell einlernt und die Stimme des autorisierten Nutzers von Stimmen anderer, insbesondere nicht-autorisierter, Nutzer unterscheidet. Die künstliche Intelligenz, die in den Stimmenerkennungsprozess integriert und in der Steuerung des Codelese-Geräts gespeichert ist, führt ein maschinelles Lernen der vom Nutzer wiedergegebenen Sprachsequenz durch und ordnet der gelernten Stimme den autorisierten Nutzer zu, so dass der Nutzer durch seine Stimme als autorisierter Nutzer erkennbar ist.

Gemäß einem weiteren bevorzugten Ausführungsbeispiel umfasst die dem autorisierten Nutzer freigegebene definierte Funktion ein Starten bzw. ein Stoppen eines Messens des Codelese-Geräts oder eine Konfiguration des Codelese-Geräts.

Vorteilhafterweise ist der Stimmenerkennungsprozess ausgebildet, eine Priorisierung der erkannten Stimmen durchzuführen und unterschiedlich priorisierte Funktionen des Codelese-Geräts entsprechend der Priorisierung der Stimmen zuzuordnen. Das heißt, die zu einem autorisierten Experten zugeordnete Stimme kann beispielsweise nicht-sicherheitsgerichtete und sicherheitsgerichtete Funktionen des Codelese-Geräts aktivieren bzw. deaktivieren. Die zu einem unautorisierten Nutzer zugeordnete Stimme kann beispielsweise nur die Funktion zum Anzeigen von Informationen des Codelese-Geräts aktivieren bzw. deaktivieren, aber nicht die hoch priorisierte Funktion der Konfiguration des Codelese-Geräts.

Ferner ist vorzugsweise die eingelernte und personalisierte Stimme in einem Speicher des Codelese-Geräts speicherbar und auf Auswerteeinheiten anderer Codelese-Geräte übertragbar. Insbesondere kann die eingelernte und personalisierte Stimme auch in einer Cloud oder in einem Speicher außerhalb des Codelese-Geräts abgespeichert sein. Hierdurch ist es vereinfacht, ein Zugriffrecht eines autorisierten Nutzers mittels seiner Stimme auf mehrere Codelese-Geräte eines Messsystems einzurichten, indem der Stimmenerkennungsprozess an einem Codelese-Gerät ausgeführt wird und die erkannte Stimme des autorisierten Nutzers an die anderen Codelese-Geräte übertragen wird oder die Stimme des autorisierten Nutzers von der Cloud oder von dem externen Speicher an die anderen Codelese-Geräte übertragen wird.

Gemäß einem bevorzugten Ausführungsbeispiel ist die Auswerteeinheit ausgebildet, akustisch oder visuell dem autorisierten Nutzer anzuzeigen, ob der Stimmenerkennungsprozess erfolgreich durchgeführt wurde oder nicht. Der Nutzer ist dadurch augenblicklich informiert, ob die definierte Funktion, wie beispielsweise die Konfiguration, des Codelese-Geräts ihm zur Verfügung steht oder nicht.

Es ist eine weitere Aufgabe der vorliegenden Erfindung, ein computer-implementiertes Verfahren zum Betreiben des Codelese-Geräts zur Verfügung zu stellen, das einen leichten Zugriff auf Funktionen und eine sichere Änderung der Funktionen des Codelese-Geräts ermöglicht.

Die Aufgabe wird erfindungsgemäß durch ein computer-implementiertes Verfahren mit den Merkmalen des unabhängigen Anspruchs 10 gelöst.

Hierbei umfasst das computer-implementierte Verfahren zum Betreiben eines Codelese-Geräts, das eine Audioeinheit zum Erfassen von akustischen Signalen einer Stimme eines Nutzers aufweist, die Schritte:
Erfassen einer Sprachsequenz des Nutzers,
Einlernen der Stimme eines autorisierten Nutzers als eine individuelle Stimme und Speichern der Stimme als personalisierte Stimme, und
Freigeben einer definierten Funktion des Codelese-Geräts für den der personalisierten Stimme zugeordneten autorisierten Nutzer, und
Ausführen der definierten Funktion, wenn ein Funktionsaufruf als Sprachbefehl mit der personalisierten Stimme von der Audioeinheit erfasst wird.

Durch das computer-implementierte Verfahren können aufgrund ihrer Betriebsposition schwerzugängliche Codelese-Geräte einfach konfiguriert werden. Vor allem ist es sichergestellt, dass nur die personalisierte Stimme des autorisierten Nutzers die der Stimme freigegebene Funktion aktiviert bzw. deaktiviert, wobei die der Stimme zugeordnete und freigegebene Funktion beispielsweise eine sicherheitsgerichtete Funktion des Codelese-Geräts ist.

Gemäß einem bevorzugten Ausführungsbeispiel wird eine definierte Sprachsequenz, ein Passwort oder ein Fingerabdruck erfasst, um eine Autorisierung des Nutzers zu bestätigen und die Personalisierung der Stimme einzuleiten. Vorteilhafterweise wird die Stimme mittels einer künstlichen Intelligenz maschinell eingelernt, so dass verschiedene Stimmen anhand von eingelernten Stimmenmustern voneinander unterschieden werden. Hierbei fordert der Stimmenerkennungsprozess den Nutzer auf, die definierte Sprachsequenz wiederzugeben. Nach der Erkennung und der Zuordnung der Stimme zu dem autorisierten Nutzer, wird die für die Stimme freigegebene und definierte Funktion durch die Stimme des autorisierten Nutzers aktivierbar bzw. deaktivierbar. Insbesondere wird ein Messbetrieb oder eine Konfiguration des Codelese-Geräts mit der personalisierten Stimme des autorisierten Nutzers gestartet bzw. beendet.

Die durch das computer-implementierte Verfahren personalisierte Stimme des autorisierten Nutzers wird als Datensatz abgespeichert, der an weitere Codelese-Geräte übermittelt wird, sodass die definierte Funktion dieser weiteren Codelese-Geräte für den autorisierten Nutzer freigegeben wird. Hierdurch ist der autorisierte Nutzer einfach in der Lage, auf mehrere, miteinander vernetzte Codelese-Geräte eines Messsystems zuzugreifen und insbesondere zu konfigurieren.

Vorteilhafterweise werden erkannte Stimmen unterschieden, um die Stimmen unterschiedlich zu priorisieren und den priorisierten Stimmen Zugriffrechte auf die entsprechende definierte Funktion des Codelese-Geräts freizugeben. Das heißt beispielsweise, die sicherheitszugeordnete und damit hoch priorisierte Funktion, wie beispielsweise der Konfiguration, des Codelese-Geräts wird der hoch priorisierten Stimme des autorisierten Nutzers zugeordnet bzw. freigegeben. Die nichtsicherheitszugeordnete Funktion, wie beispielsweise die Anzeige von Informationen, des Codelese-Geräts wird der niedrig priorisierten Stimme des unautorisierten Nutzers freigegeben bzw. zugeordnet, so dass der unautorisierte Nutzer von einer Konfiguration des Codelese-Geräts sicher ausgeschlossen werden kann.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Perspektiv-Darstellung eines Messsystems für ein Förderband;
- Fig. 2: eine schematische Darstellung eines erfindungsgemäßen Codelese-Geräts; und
- Fig. 3: eine schematische Darstellung eines bevorzugten Ausführungsbeispiels eines erfindungsgemäßen Stimmenerkennungsprozesses des Codelese-Geräts.

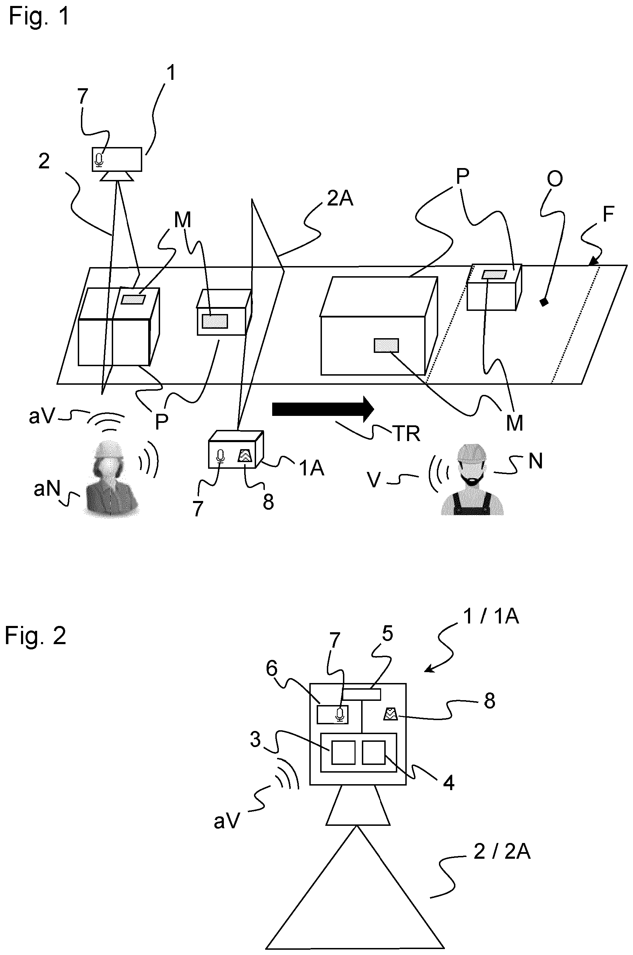

Figur 1 zeigt schematisch ein Förderband F, auf dem Pakete P in Transportrichtung TR gemäß dem dargestellten schwarzen Pfeil beispielsweise zu einem nicht gezeigten Sortierer transportiert werden. Das gezeigte Anwendungsbeispiel des Förderbandes F umfasst zwei Codelese-Geräte 1 und 1A, die derart an dem Förderband F angeordnet sind, dass ein jeweiliger Lesebereich 2 und 2A der Codelese-Geräte 1 und 1A auf das Förderband F gerichtet ist, um die durch die Lesebereiche 2 und 2A der Codelese-Geräte 1 und 1A transportierten Pakete P zu erfassen.

Hierbei können, je nach Anwendungsfall und Konfiguration des jeweiligen Codelese-Geräts 1 bzw. 1A, die Codelese-Geräte 1 und 1A gleiche oder unterschiedliche Informationen aus an den Paketen P vorgesehenen Codes M für einen Nutzer N oder aN erfasst werden.

In dem dargestellten Anwendungsbeispiel in Figur 1 ist das, in Bezug auf die Transportrichtung TR der Pakete P am Anfang des Förderbandes F angeordnete, erste Codelese-Gerät 1 vorgesehen, um die auf der Oberseite O angeordneten Codes M zu erfassen. Das in Bezug auf das erste Codelese-Gerät 1 nachfolgend angeordnete zweite Codelese-Gerät 1A ist vorgesehen, um seitlich angeordnete Codes M zu erfassen. Hierbei ist der Code M auf einem Aufkleber als Strichcode oder als zweidimensionaler Code ausgebildet.

Um den Lesebereich 2 bzw. 2A bereitzustellen, weist das erfindungsgemäße Codelese-Gerät 1 bzw. 1A, wie schematisch in Figur 2 dargestellt, eine Beleuchtungseinheit 3, die den Lesebereich 2 bzw. 2A des Codelese-Geräts 1 bzw. 1A beleuchtet, und eine Empfangseinheit 4, die den Code aus dem Lesebereich 2 bzw. 2A erfasst, auf. Die Information des Codes ermittelt eine Auswerteeinheit 5 des Codelese-Geräts 1 bzw. 1A.

Erfindungsgemäß ist eine Audioeinheit 6 vorgesehen, die akustisch eine Stimme V bzw. aV des Nutzers N bzw. aN erfasst. Die akustischen Signale werden an die Auswerteeinheit 5 übermittelt, die ausgebildet ist, einen Stimmeneinlernprozess auszuführen, um die erfasste Stimme V als eine individuelle Stimme aV eines autorisierten Nutzers aN zu erkennen und abzuspeichern, so dass die Stimme V als personalisierte Stimme aV des autorisierten Nutzers aN abgespeichert ist. Hierbei ist es besonders vorteilhaft, eine künstliche Intelligenz vorzusehen, die die personalisierte Stimme aV des autorisierten Nutzers aN maschinell einlernt und später im Erkennungsprozess die personalisierte Stimme aV des autorisierten Nutzers aN von Stimmen V anderer, insbesondere nicht-autorisierter, Nutzer N unterscheidet. Die künstliche Intelligenz ist vorzugsweise in der Auswerteeinheit 5 gespeichert.

Nachdem die Stimme des autorisierten Nutzers aN eingelernt wurde, kann in einem folgenden Stimmenerkennungsprozess eine Stimme V als personalisierte Stimme aV des autorisierten Nutzers aN erkannt werden. Ist der autorisierte Nutzer aN so erkannt worden, sind definierte Funktionen des Codelese-Geräts 1 bzw. 1A freigeschaltet, können also aufgerufen und ausgeführt werden. Dies geschieht allerdings nur, wenn der entsprechende Sprachbefehl für die Funktion auch von dem autorisierten Nutzer aN stammt. Also nicht nur die Freischaltung der Funktionen erfolgt nutzerbasiert, sondern auch der tatsächliche Aufruf (mit Ausführung) der Funktion erfolgt nur für den autorisierten Nutzer aN.

Insbesondere kann die dem autorisierten Nutzer aN freigegebene Funktion ein Starten bzw. ein Stoppen eines Messens des Codelese-Geräts 1 bzw. 1A oder eine Konfiguration des Codelese-Geräts 1 bzw. 1A umfassen.

Mit anderen Worten der Stimmenerkennungsprozess ermöglicht es dem autorisierten Nutzer aN mit einem Sprachbefehl, einerseits auf die Konfiguration des Codelese-Geräts 1 bzw. 1A zuzugreifen, da der Stimmenerkennungsprozess die Konfigurationsfunktion des Codelese-Geräts 1 bzw. 1A der personalisierten Stimme aV des autorisierten Nutzers aN zugeordnet und freigegeben hat. Andererseits ermöglicht der Stimmenerkennungsprozess auch die autorisierte Ausführung des Sprachbefehls für eine bestimmte Funktion. Zusätzlich kann der Sprachbefehl dem autorisierten Nutzer aN ermöglichen, Hardware-Elemente des Codelese-Geräts 1 bzw. 1A zu aktivieren oder zu deaktivieren. Hierbei umfassen die Hardware-Elemente beispielsweise Taster bzw. Knöpfe oder Kommunikationsschnittstellen, wie USB- oder SD-Karten-Slots, des Codelese-Geräts 1 bzw. 1A. Mit seiner eingelernten Stimme aV ist der autorisierte Nutzer aN somit in der Lage, per Sprachbefehl Bedienknöpfe freizuschalten oder vor Manipulation zu schützen.

Weiterhin ist der Stimmeneinlernprozess ausgebildet, eine Autorisierung des Nutzers N durch eine definierte Sprachsequenz, ein Passwort oder einen Fingerabdruck zu starten. Insbesondere ist die Autorisierung des Nutzers N als autorisierter Nutzer aN zum Start des Stimmeneinlernprozesses durchzuführen. Hierzu ist vorzugsweise ein Mikrofon 7 oder ein Fingerabdrucksensor 8 vorgesehen, mit dem die Autorisierung des Nutzers N durchführbar ist.

Wie bei dem in Figur 1 gezeigten Anwendungsbeispiel des Förderbandes F ist es einfach für den autorisierten Nutzer aN trotz einer Montage des Codelese-Geräts 1 über dem Förderband F möglich, eine Konfiguration des Codelese-Geräts 1 durchzuführen, indem er mit einem Sprachbefehl die Konfigurationsfunktion des Codelese-Geräts 1 aufruft.

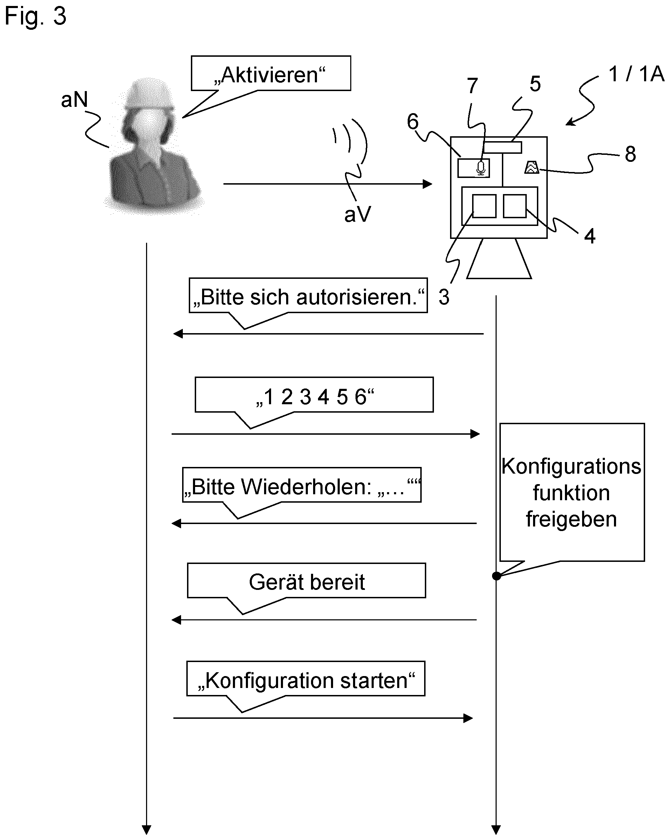

Im Folgenden ist anhand Figur 3 ein bevorzugtes Ausführungsbeispiel des erfindungsgemäßen, computer-implementierten Verfahrens zum Betreiben des Codelese-Geräts 1 und 1A beschrieben.

Der Nutzer N bzw. aN aktiviert akustisch das Codelese-Gerät 1 bzw. 1A, indem er beispielsweise einen in der Auswerteeinheit 5 des Codelese-Geräts 1 bzw. 1A gespeicherten Befehl dem Codelese-Gerät 1 bzw. 1A mitteilt.

Das Codelese-Gerät 1 bzw. 1A erfasst den Befehl und aktiviert den in der Auswerteeinheit 5 gespeicherten Stimmenerkennungsprozess, so dass das Codelese-Gerät 1 bzw. 1A den Nutzer N bzw. aN auffordert, seine Autorisierung durch Wiedergeben einer Sprachsequenz, eines Passwortes oder durch einen Fingerabdruck-Scan nachzuweisen. Hierbei ist die Sprachsequenz, das Passwort oder der Fingerabdruck in der Auswerteeinheit 5 gespeichert.

Wenn der Nutzer N keine Autorisierung abgibt, weil die geforderte Sprachsequenz nicht erfasst werden konnte, lernt der Stimmenerkennungsprozess des Codelese-Geräts 1 bzw. 1A die erfasste Stimme V des Nutzers N als die Stimme V eines unautorisierten Nutzers N ein. Somit kann der als unautorisiert erfasste Nutzer N mit seiner Stimme V das Codelese-Gerät 1 bzw. 1A aktivieren und dessen Informationen anzeigen lassen. Doch der Nutzer N ist nicht in Lage auf hoch priorisierte, insbesondere sicherheitsrelevante Funktionen, wie beispielsweise das Konfigurieren des Codelese-Geräts 1 bzw. 1A, zuzugreifen.

Wenn eine Autorisierung erfasst wird, bei der die Sprachsequenz, das Passwort oder der Fingerabdruck korrekt dem Codelese-Gerät 1 bzw. 1A mitgeteilt ist, fordert der Stimmenerkennungsprozess des Codelese-Geräts 1 bzw. 1A den als autorisiert erfassten Nutzer aN auf, eine definierte Sprachsequenz zu wiederholen.

Der Stimmenerkennungsprozess erkennt und ordnet die die definierte Sprachsequenz wiedergebende Stimme als eine individuelle Stimme aV des autorisierten Nutzers aN ein, so dass die Stimme aV personalisiert wird. Hierbei wird insbesondere die personalisierte Stimme aV mittels einer künstlichen Intelligenz maschinell eingelernt oder mittels eines Vergleichs mit einem gespeicherten Stimmenmuster des autorisierten Nutzers aV wiedererkannt. Dadurch werden verschiedene Stimmen V bzw. aV anhand von eingelernten Stimmenmustern voneinander unterschieden.

Zumindest eine definierte Funktion des Codelese-Geräts 1 bzw. 1A wird dem der personalisierten Stimme aV zugeordneten autorisierten Nutzer aN freigegeben. Die definierte Funktion wird ausgeführt, wenn ein Sprachbefehl mit der personalisierten Stimme aV von der Audioeinheit 6 erfasst wird. Insbesondere wird ein Messbetrieb oder eine Konfiguration des Codelese-Geräts 1 bzw. 1A mit der personalisierten Stimme aV gestartet bzw. beendet.

Das heißt, der autorisierte Nutzer aN ist in der Lage, mit seiner personalisierten Stimme aV per Sprachbefehl definierte Funktionen des Codelese-Geräts 1 bzw. 1A zu starten und zu beenden. Insbesondere kann der autorisierte Nutzer aN das Codelese-Gerät 1 bzw. 1A konfigurieren, auch wenn er, wie in Figur 1 dargestellt, keinen hindernisfreien Zugang zu dem Codelese-Gerät 1 hat. Insbesondere können die definierten freigegebenen Funktionen des Codelese-Geräts 1 bzw. 1A auch ein Aktivieren oder Deaktivieren von Hardware-Elementen, wie beispielsweise Taster, Knöpfe oder Kommunikationsschnittstellen, insbesondere USB- oder SD-Karten-Slots, per Sprachbefehl umfassen, so dass der autorisierte Nutzer aN mittels eines Sprachbefehls solche Hardware-Elemente beispielsweise vor Manipulation schützen kann.

Vorzugsweise wird die personalisierte Stimme aV des autorisierten Nutzers aN als Datensatz abgespeichert, der an weitere Codelese-Geräte 1A übermittelbar ist, sodass definierte Funktionen auch dieser weiteren Codelese-Geräte für den autorisierten Nutzer aN freigegeben sind. Der autorisierte Nutzer aN ist damit in der Lage, die Funktionen auch der weiteren Codelese-Geräte 1A mittels seiner Stimme aV zu aktivieren bzw. zu deaktivieren.

### Bezugszeichenliste

- 1, 1A: Codelese-Gerät
- 2, 2A: Lesebereich des Codelese-Geräts
- 3: Beleuchtungseinheit
- 4: Empfangseinheit
- 5: Auswerteeinheit
- 6: Audioeinheit
- 7: Mikrofon
- 8: Fingerabdrucksensor

- aN: autorisierter Nutzer
- aV: personalisierte/autorisierte Stimme
- F: Förderband
- M: Codes
- N: Nutzer
- O: Oberseite
- P: Paket
- TR: Transportrichtung
- V: Stimme

## Patentansprüche

1. Codelese-Gerät (1, 1A) zum Lesen eines optischen Codes, mit einer Beleuchtungseinheit (3) zum Beleuchten eines Lesebereichs (2, 2A) des Codelese-Geräts (1, 1A),
einer Empfangseinheit (4) zum Erfassen des Codes aus dem Lesebereich (2, 2A),
einer Auswerteeinheit (5) zum Ermitteln von Informationen des Codes, **gekennzeichnet, durch**
eine Audioeinheit (6) zum Erfassen von einer Stimme (aV bzw. V) eines Nutzers (aN bzw. N),
wobei die Auswerteeinheit (5) ausgebildet ist, einen Stimmeneinlernprozess auszuführen, um eine Stimme (aV bzw. V) als eine individuelle Stimme (aV) eines autorisierten Nutzers (aN) einzulernen und abzuspeichern, so dass die Stimme (aV) als personalisierte Stimme (aV) des autorisierten Nutzers (aN) abgespeichert ist, und
wobei die Auswerteeinheit (5) ausgebildet ist, einen Stimmenerkennungsprozess auszuführen, in dem die personalisierte Stimme (aV) als Stimme des autorisierten Nutzers (aN) erkannt wird und weiter ausgebildet ist, nur dann definierte Funktionen des Codelese-Geräts (1, 1A) auszuführen, wenn die personalisierte Stimme (aV) des autorisierten Nutzers (aN) erkannt wurde.

2. Codelese-Gerät (1, 1A) nach Anspruch 1, wobei die Auswerteeinheit weiter ausgebildet ist, den Stimmeneinlernprozess nur dann zu starten, wenn eine Autorisierung des Nutzers (aN) durch eine definierte Sprachsequenz, ein Passwort oder einen Fingerabdruck festgestellt wurde.

3. Codelese-Gerät (1, 1A) nach Anspruch 2, wobei ein Mikrofon (7) oder ein Fingerabdrucksensor (8) vorgesehen ist, um die Autorisierung durchzuführen.

4. Codelese-Gerät (1, 1A) nach Anspruch 2 oder 3, wobei die definierte Sprachsequenz in der Auswerteeinheit (5) des Codelese-Geräts (1, 1A) gespeichert und vorgesehen ist, zum Wiedererkennen oder zum Einlernen der Stimme des autorisierten Nutzers (aN) durch den Stimmenerkennungsprozess.

5. Codelese-Gerät (1, 1A) nach einem der vorhergehenden Ansprüche 1 bis 4, wobei die dem autorisierten Nutzer (aN) freigegebene definierte Funktion ein Starten bzw. ein Stoppen eines Messens des Codelese-Geräts (1, 1A) oder eine Konfiguration des Codelese-Geräts (1, 1A) umfasst.

6. Codelese-Gerät (1, 1A) nach einem der vorhergehenden Ansprüche 1 bis 5, wobei eine künstliche Intelligenz vorgesehen ist, zum maschinellen Einlernen der Stimme (aV) des autorisierten Nutzers (aN) und zum Unterscheiden der Stimme (aV) des autorisierten Nutzers (aN) von Stimmen (V) anderer, insbesondere nicht-autorisierter, Nutzer (N).

7. Codelese-Gerät (1, 1A) nach einem der vorhergehenden Ansprüche 1 bis 6, wobei der Stimmenerkennungsprozess ausgebildet ist, eine Priorisierung der erkannten Stimmen (aV) durchzuführen und unterschiedlich priorisierte Funktionen des Codelese-Geräts (1, 1A) entsprechend der Priorisierung der Stimmen zuzuordnen.

8. Codelese-Gerät (1, 1A) nach einem der vorhergehenden Ansprüche 1 bis 7, wobei die eingelernte und personalisierte Stimme (aV) in einem Speicher des Codelese-Geräts (1, 1A) speicherbar und auf Auswerteeinheiten (5) anderer Codelese-Geräte (1, 1A) übertragbar ist.

9. Codelese-Gerät (1, 1A) nach einem der vorhergehenden Ansprüche 1 bis 8, wobei die Auswerteinheit (5) ausgebildet ist, akustisch oder visuell dem autorisierten Nutzer (aN) anzuzeigen, ob der Stimmenerkennungsprozess erfolgreich durchgeführt wurde oder nicht.

10. Computer-implementiertes Verfahren zum Betreiben eines Codelese-Geräts (1, 1A), das eine Audioeinheit (6) zum Erfassen von akustischen Signalen einer Stimme (V bzw. aV) eines Nutzers (aN, N) aufweist, umfassend die Schritte:
Erfassen einer Sprachsequenz des Nutzers (aN, N),
Einlernen der Stimme (V) eines autorisierten Nutzers (aN) als eine individuelle Stimme (aV) und Speichern der Stimme (aV) als personalisierte Stimme (aV), und
Freigeben einer definierten Funktion des Codelese-Geräts (1, 1A) für den der personalisierten Stimme (aV) zugeordneten autorisierten Nutzer (aN), und
Ausführen der definierten Funktion, wenn ein Funktionsaufruf als Sprachbefehl mit der personalisierten Stimme (aV) von der Audioeinheit (5) erfasst wird.

11. Computer-implementiertes Verfahren nach Anspruch 10, wobei eine definierte Sprachsequenz, ein Passwort oder ein Fingerabdruck erfasst wird, um eine Autorisierung des Nutzers (aN) zu bestätigen und die Personalisierung der Stimme einzuleiten.

12. Computer-implementiertes Verfahren nach Anspruch 10 oder 11, wobei die Stimme (V, aV) mittels einer künstlichen Intelligenz maschinell eingelernt wird, so dass verschiedene Stimmen (V, aV) anhand von eingelernten Stimmenmustern voneinander unterschieden werden.

13. Computer-implementiertes Verfahren nach einem der vorhergehenden Ansprüche 10 bis 12, wobei ein Messbetrieb oder eine Konfiguration des Codelese-Geräts (1, 1A) mit der personalisierten Stimme (aV) gestartet bzw. beendet wird.

14. Computer-implementiertes Verfahren nach einem der vorhergehenden Ansprüche 10 bis 13, wobei die personalisierte Stimme (aV) des autorisierten Nutzers (aN) als Datensatz abgespeichert wird, der an weitere Codelese-Geräte (1, 1A) übermittelt wird, sodass die definierte Funktion dieser weiteren Codelese-Geräte (1, 1A) für den autorisierten Nutzer (aN) freigegeben wird.

15. Computer-implementiertes Verfahren nach einem der vorhergehenden Ansprüche 10 bis 14, wobei erkannte Stimmen (V, aV) unterschieden werden, um die Stimmen (V, aV) unterschiedlich zu priorisieren und den priorisierten Stimmen (aV) Zugriffrechte auf die entsprechende definierte Funktion des Codelese-Geräts (1, 1A) freizugeben.

## Claims

1. A code reading device (1, 1A) for reading an optical code, comprising an illumination unit (3) for illuminating a reading zone (2, 2A) of the code reading device (1, 1A),
a reception unit (4) for capturing the code from the reading zone (2, 2A),
an evaluation unit (5) for determining information of the code,
**characterized by**
an audio unit (6) for detecting a voice (aV or V) of a user (aN or N), wherein the evaluation unit (5) is configured to perform a voice learning process to teach and store a voice (aV or V) as an individual voice (aV) of an authorized user (aN) so that the voice (aV) is stored as a personalized voice (aV) of the authorized user (aN), and
wherein the evaluation unit (5) is configured to perform a voice recognition process, in which the personalized voice (aV) is recognized as the voice of the authorized user (aN), and is further configured to perform defined functions of the code reading device (1, 1A) only if the personalized voice (aV) of the authorized user (aN) has been recognized.

2. A code reading device (1, 1A) according to claim 1, wherein the evaluation unit is further configured to start the voice learning process only if an authorization of the user (aN) by a defined voice sequence, a password or a fingerprint has been detected.

3. A code reading device (1, 1A) according to claim 2, wherein a microphone (7) or a fingerprint sensor (8) is provided to perform the authorization.

4. A code reading device (1, 1A) according to claim 2 or 3, wherein the defined voice sequence is stored in the evaluation unit (5) of the code reading device (1, 1A) and is provided for recognizing or for teaching the voice of the authorized user (aN) by means of the voice recognition process.

5. A code reading device (1, 1A) according to any one of the preceding claims 1 to 4, wherein the defined function that is enabled for the authorized user (aN) comprises a starting or a stopping of a measurement of the code reading device (1, 1A) or a configuration of the code reading device (1, 1A).

6. A code reading device (1, 1A) according to any one of the preceding claims 1 to 5, wherein an artificial intelligence is provided for machine learning of the voice (aV) of the authorized user (aN) and for distinguishing the voice (aV) of the authorized user (aN) from voices (V) of other users (N), in particular non-authorized users (N).

7. A code reading device (1, 1A) according to any one of the preceding claims 1 to 6, wherein the voice recognition process is configured to perform a prioritization of the recognized voices (aV) and to assign differently prioritized functions of the code reading device (1, 1A) according to the prioritization of the voices.

8. A code reading device (1, 1A) according to any one of the preceding claims 1 to 7, wherein the taught and personalized voice (aV) can be stored in a memory of the code reading device (1, 1A) and can be transferred to evaluation units (5) of other code reading devices (1, 1A).

9. A code reading device (1, 1A) according to any one of the preceding claims 1 to 8, wherein the evaluation unit (5) is configured to acoustically or visually indicate to the authorized user (aN) whether the voice recognition process has been performed successfully or not.

10. A computer-implemented method for operating a code reading device (1, 1A), which has an audio unit (6) for detecting acoustic signals of a voice (V or aV) of a user (aN, N), comprising the steps:
detecting a voice sequence of the user (aN, N),
teaching the voice (V) of an authorized user (aN) as an individual voice (aV) and storing the voice (aV) as a personalized voice (aV), and
enabling a defined function of the code reading device (1, 1A) for the authorized user (aN) assigned to the personalized voice (aV), and
performing the defined function when a function call is detected as a voice command with the personalized voice (aV) by the audio unit (5).

11. A computer-implemented method according to claim 10, wherein a defined voice sequence, a password or a fingerprint is detected to confirm an authorization of the user (aN) and to initiate the personalization of the voice.

12. A computer-implemented method according to claim 10 or 11, wherein the voice (V, aV) is taught by machine learning by means of artificial intelligence so that different voices (V, aV) are distinguished from one another based on taught voice patterns.

13. A computer-implemented method according to any one of the preceding claims 10 to 12, wherein a measuring operation or a configuration of the code reading device (1, 1A) is started or terminated with the personalized voice (aV).

14. A computer-implemented method according to any one of the preceding claims 10 to 13, wherein the personalized voice (aV) of the authorized user (aN) is stored as a data set which is transmitted to further code reading devices (1, 1A) so that the defined function of these further code reading devices (1, 1A) is enabled for the authorized user (aN).

15. A computer-implemented method according to any one of the preceding claims 10 to 14, wherein recognized voices (V, aV) are distinguished to prioritize the voices (V, aV) differently and to grant the prioritized voices (aV) access rights to the corresponding defined function of the code reading device (1, 1A).

## Revendications

1. Appareil de lecture de code (1, 1A) pour lire un code optique, comprenant une unité d'éclairage (3) pour éclairer une zone de lecture (2, 2A) de l'appareil de lecture de code (1, 1A),
une unité de réception (4) pour détecter le code dans la zone de lecture (2, 2A),
une unité d'évaluation (5) pour déterminer des informations du code, **caractérisé par** une unité audio (6) pour saisir une voix (aV ou V) d'un utilisateur (aN ou N),
l'unité d'évaluation (5) étant conçue pour exécuter un processus d'apprentissage vocal afin d'apprendre et de stocker une voix (aV ou V) en tant que voix individuelle (aV) d'un utilisateur autorisé (aN), de sorte que la voix (aV) soit stockée en tant que voix personnalisée (aV) de l'utilisateur autorisé (aN), et
l'unité d'évaluation (5) étant conçue pour exécuter un processus de reconnaissance vocale dans lequel la voix personnalisée (aV) est reconnue comme la voix de l'utilisateur autorisé (aN), et étant en outre conçue pour n'exécuter des fonctions définies de l'appareil de lecture de code (1, 1A) que lorsque la voix personnalisée (aV) de l'utilisateur autorisé (aN) a été reconnue.

2. Appareil de lecture de code (1, 1A) selon la revendication 1,
dans lequel l'unité d'évaluation est en outre conçue pour ne démarrer le processus d'apprentissage vocal que lorsqu'une autorisation de l'utilisateur (aN) a été constatée par une séquence vocale définie, un mot de passe ou une empreinte digitale.

3. Appareil de lecture de code (1, 1A) selon la revendication 2,
dans lequel un microphone (7) ou un capteur d'empreintes digitales (8) est prévu pour effectuer l'autorisation.

4. Appareil de lecture de code (1, 1A) selon la revendication 2 ou 3,
dans lequel la séquence vocale définie est stockée dans l'unité d'évaluation (5) de l'appareil de lecture de code (1, 1A) et est prévue pour reconnaître ou apprendre la voix de l'utilisateur autorisé (aN) par le processus de reconnaissance vocale.

5. Appareil de lecture de code (1, 1A) selon l'une des revendications précédentes 1 à 4,
dans lequel la fonction définie libérée pour l'utilisateur autorisé (aN) comprend le démarrage ou l'arrêt d'une mesure de l'appareil de lecture de code (1, 1A) ou une configuration de l'appareil de lecture de code (1, 1A).

6. Appareil de lecture de code (1, 1A) selon l'une des revendications précédentes 1 à 5,
dans lequel une intelligence artificielle est prévue pour l'apprentissage automatique de la voix (aV) de l'utilisateur autorisé (aN) et pour distinguer la voix (aV) de l'utilisateur autorisé (aN) des voix (V) d'autres utilisateurs (N), en particulier non autorisés.

7. Appareil de lecture de code (1, 1A) selon l'une des revendications précédentes 1 à 6,
dans lequel le processus de reconnaissance vocale est conçu pour effectuer une hiérarchisation des voix reconnues (aV) et pour attribuer des fonctions hiérarchisées différemment de l'appareil de lecture de code (1, 1A) en fonction de la hiérarchisation des voix.

8. Appareil de lecture de code (1, 1A) selon l'une des revendications précédentes 1 à 7,
dans lequel la voix apprise et personnalisée (aV) peut être stockée dans une mémoire de l'appareil de lecture de code (1, 1A) et être transmise à des unités d'évaluation (5) d'autres appareils de lecture de code (1, 1A).

9. Appareil de lecture de code (1, 1A) selon l'une des revendications précédentes 1 à 8,
dans lequel l'unité d'évaluation (5) est conçue pour indiquer de manière acoustique ou visuelle à l'utilisateur autorisé (aN) si le processus de reconnaissance vocale a été exécuté avec succès ou non.

10. Procédé mis en œuvre par ordinateur pour faire fonctionner un appareil de lecture de code (1, 1A) qui comporte une unité audio (6) pour saisir des signaux acoustiques d'une voix (V ou aV) d'un utilisateur (aN, N), comprenant les étapes consistant à :
enregistrer une séquence vocale de l'utilisateur (aN, N),
apprendre la voix (V) d'un utilisateur autorisé (aN) en tant que voix individuelle (aV) et stocker la voix (aV) en tant que voix personnalisée (aV), et libérer une fonction définie de l'appareil de lecture de code (1, 1A) pour l'utilisateur autorisé (aN) attribué à la voix personnalisée (aV), et
exécuter la fonction définie lorsqu'un appel de fonction sous la forme d'une instruction vocale avec la voix personnalisée (aV) est détecté par l'unité audio (5).

11. Procédé mis en œuvre par ordinateur selon la revendication 10,
dans lequel une séquence vocale définie, un mot de passe ou une empreinte digitale est détecté(e) afin de confirmer l'autorisation de l'utilisateur (aN) et de lancer la personnalisation de la voix.

12. Procédé mis en œuvre par ordinateur selon la revendication 10 ou 11, dans lequel la voix (V, aV) est apprise automatiquement à l'aide d'une intelligence artificielle, de sorte que différentes voix (V, aV) peuvent être distinguées les unes des autres à l'aide de modèles de voix appris.

13. Procédé mis en œuvre par ordinateur selon l'une des revendications précédentes 10 à 12,
dans lequel une opération de mesure ou une configuration de l'appareil de lecture de code (1, 1A) est démarrée ou terminée avec la voix personnalisée (aV).

14. Procédé mis en œuvre par ordinateur selon l'une des revendications précédentes 10 à 13,
dans lequel la voix personnalisée (aV) de l'utilisateur autorisé (aN) est stockée sous forme d'ensemble de données qui est transmis à d'autres appareils de lecture de code (1, 1A), de sorte que la fonction définie de ces autres appareils de lecture de code (1, 1A) est libérée pour l'utilisateur autorisé (aN).

15. Procédé mis en œuvre par ordinateur selon l'une des revendications précédentes 10 à 14,
dans lequel les voix reconnues (V, aV) sont distinguées afin de hiérarchiser différemment les voix (V, aV) et d'accorder aux voix hiérarchisées (aV) des droits d'accès à la fonction définie correspondante de l'appareil de lecture de code (1, 1A).
